# EUROPEAN PATENT APPLICATION

(11) **EP 4 113 059 A1**
(43) Date of publication of application: **04.01.2023**
(21) Application number: 21770853.6
(22) Date of filing: 08.03.2021
(51) Int. Cl.: G01C 15/00

(54) **PORTABLE DISPLAY TERMINAL FOR SURVEY ASSISTANCE, SURVEY ASSISTANCE SYSTEM, SURVEY ASSISTANCE METHOD, AND SURVEY ASSISTANCE PROGRAM**

(30) Priority: 19.03.2020 JP 2020048771
(71) Applicant: TOPCON CORPORATION, Tokyo 174-8580 (JP)
(72) Inventor: NAKAMURA, Keisuke, Tokyo 174-8580 (JP); ICHIRIYAMA, Umihiro, Tokyo 174-8580 (JP); MIYAJIMA, Motohiro, Tokyo 174-8580 (JP); NISHI, Yoshihiro, Tokyo 174-8580 (JP); SHIMIZU, Ryosuke, Tokyo 174-8580 (JP)
(74) Representative: Schmitt-Nilson Schraud Waibel Wohlfrom Patentanwälte Partnerschaft mbB
(86) International application number: PCT/JP2021/009020
(87) International publication number: WO 2021/187199

(57) **Abstract**

A portable display terminal for survey assistance includes: a screen unit and a selection unit of the portable display terminal; a design information acquisition unit configured to acquire design information including an identifier of a design drawing, and a plan view, a longitudinal sectional view, and a transverse sectional view that are associated with the identifier; a design information summarization unit configured to generate summary drawings of the plan view, the longitudinal sectional view, and the transverse sectional view of the design drawing; a design information selection display unit configured to line up and display a plurality of combinations of the summary drawings in a selectable manner; and a screen display unit configured to display an image of at least one of the plan view, the longitudinal sectional view, or the transverse sectional view of the design drawing associated with the combination of the summary drawings selected by a selection unit on a screen unit of the portable display terminal.

## Description

### TECHNICAL FIELD

The present disclosure relates to a portable display terminal for survey assistance, a survey assistance system, a survey assistance method, and a survey assistance program.

### BACKGROUND ART

In the constructions of routes and the like, construction plan drawings are prepared, and construction plans are made while taking into account the amount of soil cut or banked. In addition, in preparing of the construction plan, the current state of the construction site is surveyed to be used as a reference of the construction plan. In the surveying of the route, longitudinal leveling and cross-sectional leveling are performed. The longitudinal leveling is a level survey performed along the center line of the route, and the cross-sectional leveling is a level survey in a direction orthogonal to the center line (route direction).

A finishing stake setting device which is portable and allows checking horizontal alignment data, longitudinal alignment data, transverse alignment data, and design data on the screen unit at a work site for setting finishing stakes is known (Patent Document 1).

### CITATION LIST

### PATENT DOCUMENT

Patent Document 1: Japanese Patent No. 4210167

### SUMMARY OF THE INVENTION

### TECHNICAL PROBLEMS

However, in the finishing stake setting device shown in Patent Document 1, retrieving and referring to the design data stored in advance is performed based on only textual information, such as a file name of the design data of the route on the retrieving screen. Therefore, the operator, who is a user, cannot visualize the shape of the route and cannot check the element data of the route included in the design data without retrieving and referring to the data each time based on the file name.

From the foregoing, it is an objective of the present disclosure to provide a portable display terminal for survey assistance, survey assistance system, survey assistance method, and survey assistance program which facilitate retrieving and referring to appropriate design data by the operator at the work site.

### SOLUTION TO THE PROBLEMS

In order to achieve the objective, a portable display terminal for survey assistance includes: a screen unit and a selection unit of the portable display terminal; a design information acquisition unit configured to acquire design information including an identifier of a design drawing, and a plan view, a longitudinal sectional view, and a transverse sectional view that are associated with the identifier; a design information summarization unit configured to generate summary drawings of the plan view, the longitudinal sectional view, and the transverse sectional view of the design drawing based on the design information acquired by the design information acquisition unit; a design information selection display unit configured to line up and display a plurality of combinations of the summary drawings generated by the design information summarization unit in a selectable manner; and a screen display unit configured to display an image of at least one of the plan view, the longitudinal sectional view, or the transverse sectional view of the design drawing associated with the combination of the summary drawings selected by the selection unit on the screen unit of the portable display terminal.

In addition, in order to achieve the objective, a survey assistance system including a surveying device, a device to be tracked, and a portable display terminal further includes: a screen unit and a selection unit of the portable display terminal; a design information acquisition unit configured to acquire design information including an identifier of a design drawing, and a plan view, a longitudinal sectional view, and a transverse sectional view that are associated with the identifier; a design information summarization unit configured to generate summary drawings of the plan view, the longitudinal sectional view, and the transverse sectional view of the design drawing based on the design information acquired by the design information acquisition unit; a design information selection display unit configured to line up and display a plurality of combinations of the summary drawings generated by the design information summarization unit in a selectable manner; and a screen display unit configured to display an image of at least one of the plan view, the longitudinal sectional view, or the transverse sectional view of the design drawing associated with the combination of the summary drawings selected by the selection unit on the screen unit of the portable display terminal; a surveying unit of the surveying device, the surveying unit being configured to survey three-dimensional coordinates which are positional information on the device to be tracked installed away from the surveying device; a surveying communication unit of the surveying device, the surveying communication unit being configured to transmit the positional information on the device to be tracked to the portable display terminal; a communication unit of the portable display terminal, the communication unit being configured to receive the positional information; and a positional information display unit configured to display a position of the device to be tracked on the design drawing displayed on the screen unit based on the positional information received by the terminal communication unit.

In addition, in order to achieve the objective, a survey assistance method includes: acquiring, by a design information acquisition unit of a portable display terminal, design information including an identifier of a design drawing, and a plan view, a longitudinal sectional view, and a transverse sectional view that are associated with the identifier; generating, by a design information summarization unit, summary drawings of the plan view, the longitudinal sectional view, and the transverse sectional view of the design drawing, based on the design information acquired by the design information acquisition unit; lining up and displaying, by a design information selection display unit, a plurality of combinations of the summary drawings generated by the design information summarization unit in a selectable manner; and displaying, by a screen display unit, an image of at least one of the plan view, the longitudinal sectional view, or the transverse sectional view of the design drawing associated with the combination of the summary drawings selected by a selection unit, on a screen unit of the portable display terminal.

In addition, in order to achieve the objective, a survey assistance program causes a computer to execute: acquiring, by a design information acquisition unit of a portable display terminal, design information including an identifier of a design drawing, and a plan view, a longitudinal sectional view, and a transverse sectional view that are associated with the identifier; generating, by a design information summarization unit, summary drawings of the plan view, the longitudinal sectional view, and the transverse sectional view of the design drawing, based on the design information acquired by the design information acquisition unit; lining up and displaying, by a design information selection display unit, a plurality of combinations of the summary drawings generated by the design information summarization unit in a selectable manner; and displaying, by a screen display unit, an image of at least one of the plan view, the longitudinal sectional view, or the transverse sectional view of the design drawing associated with the combination of the summary drawings selected by a selection unit, on a screen unit of the portable display terminal.

### ADVANTAGES OF THE INVENTION

According to the present disclosure, elements constituting the design data of the route are visualized and displayed. This facilitates retrieving and referring to appropriate design data by the operator at a work site.

### BRIEF DESCRIPTION OF THE DRAWINGS

FIG. 1 illustrates a configuration of a survey assistance system of an embodiment.
FIG. 2 schematically shows surveying.
FIG. 3 illustrates summary drawings according to the present embodiment.

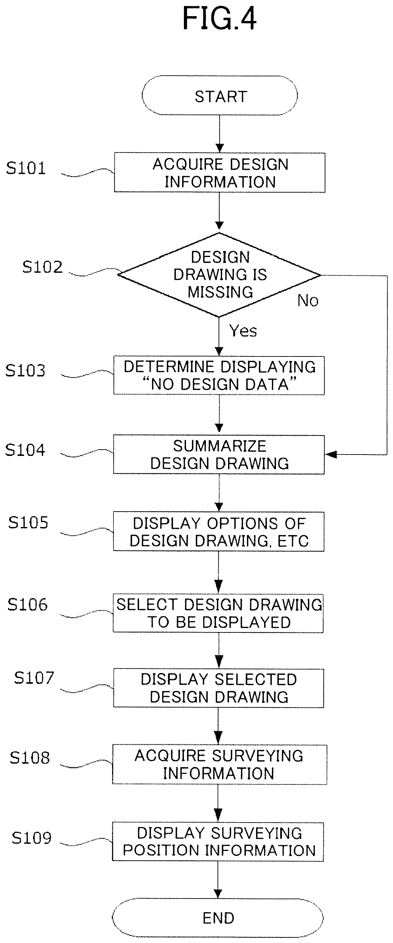

FIG. 4 is a flowchart illustrating procedures of the present embodiment.
FIG. 5 is an example of a screen displayed on a portable display terminal according to the present embodiment.
FIG. 6 is another example of a screen displayed on the portable display terminal according to the present embodiment.

### DESCRIPTION OF EMBODIMENT

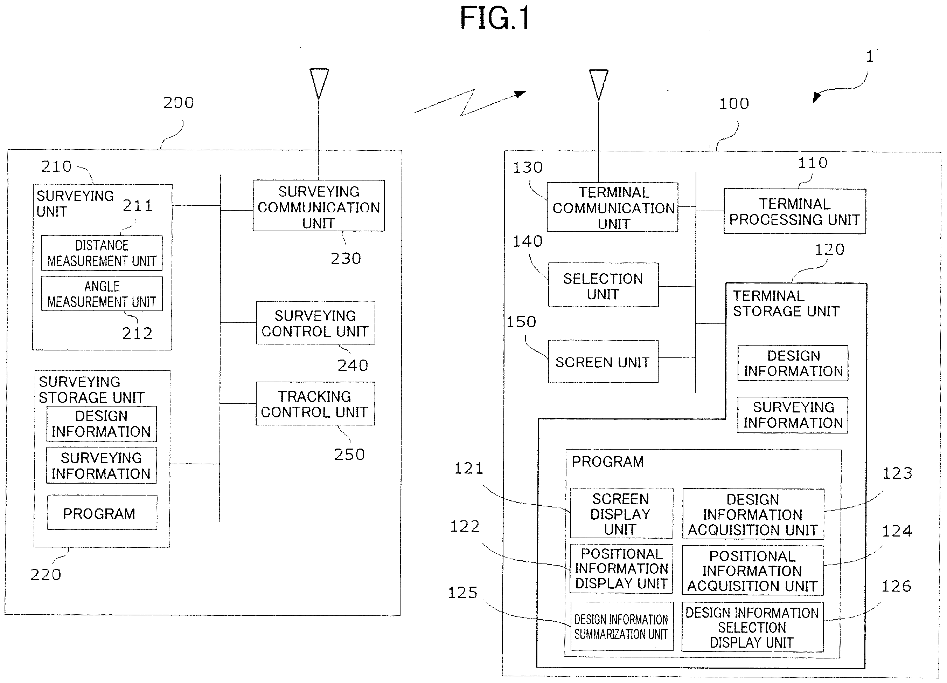

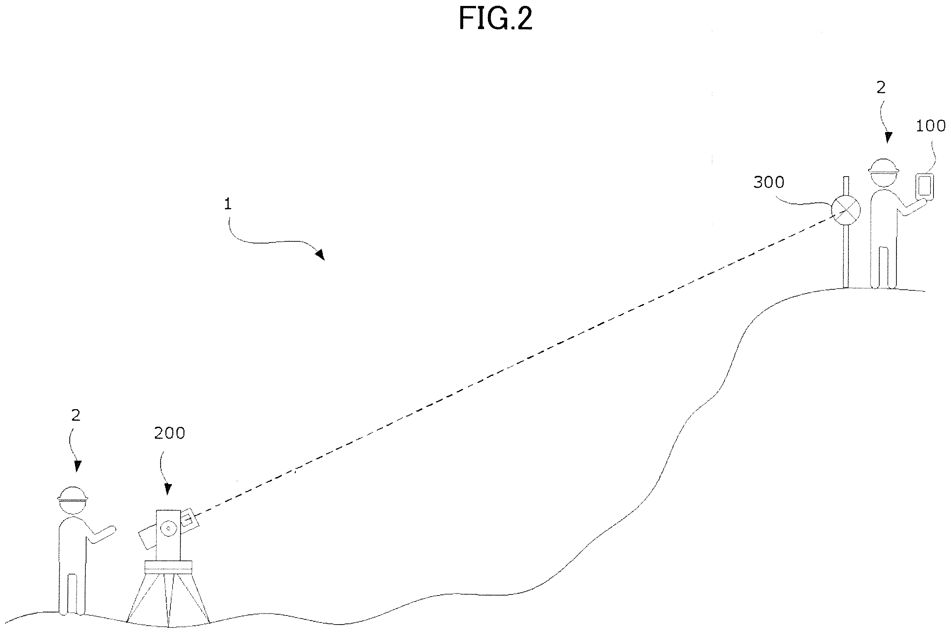

An embodiment of the present disclosure will be described below with reference to the drawings. FIG. 1 shows configurations of a portable display terminal for survey assistance and a survey assistance system including the portable display terminal according to an embodiment of the present disclosure. FIG. 2 schematically shows the survey by using the survey assistance system.

As shown in FIGS. 1 and 2, the survey assistance system 1 according to the present embodiment includes a surveying device 200, a portable display terminal 100 for survey assistance, and a device 300 to be tracked.

The surveying device 200 is, according to one embodiment, a surveying instrument of a light wave type such as a total station (TS) on known position coordinates, for example. The "light wave type such as TS" includes, in addition to the TS, measurement instruments capable of performing measurement equivalent to that by the TS with an automatic tracking function and using light waves without any telescope. The surveying device 200 can automatically track the device 300 to be tracked as a target to survey a predetermined position of the device 300 to be tracked. The device 300 to be tracked includes an optical element that reflects the light radiated from the surveying device 200 back to the surveying device 200. That is, the optical element is what is called a "retroreflective prism." The device 300 to be tracked may be a pole for surveying that has a typical length and includes a retroreflective prism.

The surveying device 200 includes a horizontal rotation driving unit and a telescope unit on the horizontal rotation driving unit with a vertical rotation driving unit interposed therebetween. The horizontal rotation driving unit is supported by a tripod and drives horizontal rotation. The vertical rotation drive unit is vertically rotatable. Although not shown, the surveying device 200 includes a horizontal orientation detector and a vertical orientation detector as angle measurement units 212. The horizontal orientation detector detects the horizontal rotation angle, whereas the vertical orientation detector detects the vertical rotation angle. These horizontal and vertical orientation detectors make it possible to perform measurement of the horizontal and vertical angles relative to the collimation direction of the telescope unit, respectively.

The telescope unit further includes, as a distance measurement unit 211, an electro-optical distance meter that measures a slope distance to the device 300 to be tracked, for example. For the sake of convenience, these angle and distance measurement units 212 and 211 are collectively referred to as a "surveying unit 210." Although not shown, the surveying device 200 includes a tracking unit capable of emitting and receiving tracking light for tracking the device 300 to be tracked.

The surveying device 200 further includes a surveying control unit 240, a tracking control unit 250, a surveying storage unit 220, and a surveying communication unit 230.

The surveying control unit 240 functions to control the surveying by the surveying device 200. Specifically, the surveying control unit 240 automatically or manually collimates the device 300 to be tracked. The surveying control unit 240 detects the horizontal angle, the vertical angle, and the slope distance between the surveying device 200 and the device 300 to be tracked using the angle measurement units (i.e., the horizontal and vertical orientation detectors) 212 and the distance measurement unit 211 described above. Here, the retroreflective prism as an example of the device 300 to be tracked is attached to a pole. The distance from the prism to a tip of the pole is known. The surveying control unit 240 thus corrects the horizontal angle, vertical angle, and slope distance detected by the angle and distance measurement units 212 and 211, and obtains the position of the tip (i.e., the position of the upper or lower end) of the pole, as surveying results.

The tracking control unit 250 controls the drive of the horizontal and vertical rotation driving units to emit tracking light by the tracking unit and to continuously receive the tracking light reflected by the device 300 to be tracked, thereby tracking the device 300.

The surveying storage unit 220 stores, in advance, various programs for controls of the surveying and tracking or other controls; or data (e.g., the altitude) on the ground to be cut or banked, design data, or other data.

The surveying communication unit 230 is communicative with external devices such as the portable display terminal 100, and is, for example, wireless communication means.

Another embodiment of the surveying device 200 is a GNSS surveying instrument. In this case, surveying is performed using a GNSS receiver as the device 300 to be tracked.

Examples of the portable display terminal 100 include a smartphone, a feature phone, a tablet, a handheld computer device (e.g., a personal digital assistant (PDA)), and a wearable terminal (e.g., a glasses-type device or a watch-type device). A general-purpose terminal is, with application software installed, usable as the portable display terminal of this embodiment. Such the portable display terminal 100 includes a screen unit 150 and is easily carriable at a work site. The screen unit 150 may be viewed hands-free or with one hand. The portable display terminal 100 may also include an internal power supply such as a battery and may thus be operated for a certain period of time without requiring an external power supply.

The portable display terminal 100 includes a terminal communication unit 130, a terminal storage unit 120, a terminal processing unit 110, a selection unit 140, and the screen unit 150.

Although not shown, the terminal processing unit 110 executes the functions and/or methods implemented by codes or commands included in the programs stored in the terminal storage unit 120. Examples of the terminal processing unit 110 include a central processing unit (CPU), a microprocessor unit (MPU), a graphics processing unit (GPU), a microprocessor, a processor core, a multiprocessor, an application specific integrated circuit (ASIC), and a field-programmable gate array (FPGA). The terminal processing unit 110 may include a logic circuit or a dedicated circuit formed in an integrated circuit, for example, to execute the processing disclosed in the embodiment. These circuits may be one or more integrated circuits. A single integrated circuit may execute the plural types of processing described in the embodiment. Although not shown, the terminal processing unit 110 may include a main storage unit that temporarily stores the programs read out from the terminal storage unit 120 and provides a workspace to the terminal processing unit 110.

The terminal communication unit 130 is communicative with the surveying communication unit 230 of the surveying device 200, and can receive the surveying results, positional information, or other information. The surveying results are results of surveying the device 300 to be tracked using the surveying device 200. The positional information (e.g., the horizontal angle, the vertical angle, and the slope distance to the pole tip) is calculated using the surveying control unit 240. The positional information may be calculated based on the surveying results by the surveying device 200 or the portable display terminal 100. The communications may be established by wire or wirelessly. As long as mutual communications are established, any communication protocol may be used.

The selection unit 140 is any one or a combination of all types of devices capable of receiving inputs from a user, that is, the operator and providing the information related to the inputs to the terminal processing unit 110. Examples of selection unit 140 include, in addition to a hardware input means such as buttons, a software input means displayed on a display unit such as a touch panel, a remote controller, and an audio input means such as a microphone.

The screen unit 150 is any one or a combination of all types of devices capable of displaying a screen. Examples of the screen unit 150 include a flat display such as a liquid crystal display or an organic light-emitting diode (OLED) display, a curved display, a folding screen on a foldable terminal, a head-mounted display, and a device displayable through projection on an object using a small projector.

The terminal storage unit 120 has the function of storing various necessary programs or various necessary data. In addition, the terminal storage unit 120 can store the surveying results received by the terminal communication unit 130 and the positional information calculated based on the surveying results. For example, the terminal storage unit 120 stores data on (e.g., the altitude of) the ground to be cut or banked, design data, or other data. The terminal storage unit 120 is any of various storage media such as a hard disk drive (HDD), a solid state drive (SSD), and a flash memory.

The information stored in the terminal storage unit 120 and the functions that are fulfilled by the application software programs will be described below.

The design information includes a design drawing necessary for a construction work of, e.g., route. Examples of the construction work of, e.g., route include constructions of structures such as roads, railroads, tunnels, bridges, ditches, waterways, and rivers. The design drawing includes, for example, alignment map data of route. The alignment map data at least includes plan view data, longitudinal sectional view data, and transverse sectional view data, which are three elements of route. The view data each include constituting point data, any point data, and other data. These data are stored in association with an identifier of the design drawing data. The identifier of the design drawing data includes data of an electronic identifier such as a design drawing file name, a design drawing ID, a design drawing number, and other data. The longitudinal sectional view data is, for example, data representing a longitudinal sectional view along the center line of route. The transverse sectional view data is, for example, data representing a sectional view in the direction perpendicular to the center line of route. The plan view data is, for example, data representing a plan view of route as viewed from immediately above. The constituting point data is, for example, data representing points where piles are driven as landmarks in the site. The any point data represents any points on the route, and for example, points a predetermined distance away from any constituting points. Piles placed along the center line of the road are referred to as center piles. Specifically, a center pile at the beginning point of the route is referred to as BP, and a center pile at the end point of the route is referred to as EP. Piles indicating the position of the boundary of the road in the width direction is referred to as width piles. Supplementary constituting points may be provided between the center piles and the width piles.

A design information acquisition unit 123 has the function of acquiring design information including the identifier of the design drawing and the plan view, longitudinal sectional view, and transverse sectional view associated with the identifier, from the terminal storage unit 120 or a storage device or another device outside the portable display terminal 100.

A design information summarization unit 125 has the function of generating a summary drawing of each of the plan view, longitudinal sectional view, and transverse sectional view of the design drawing, based on the design information acquired by the design information acquisition unit 123.

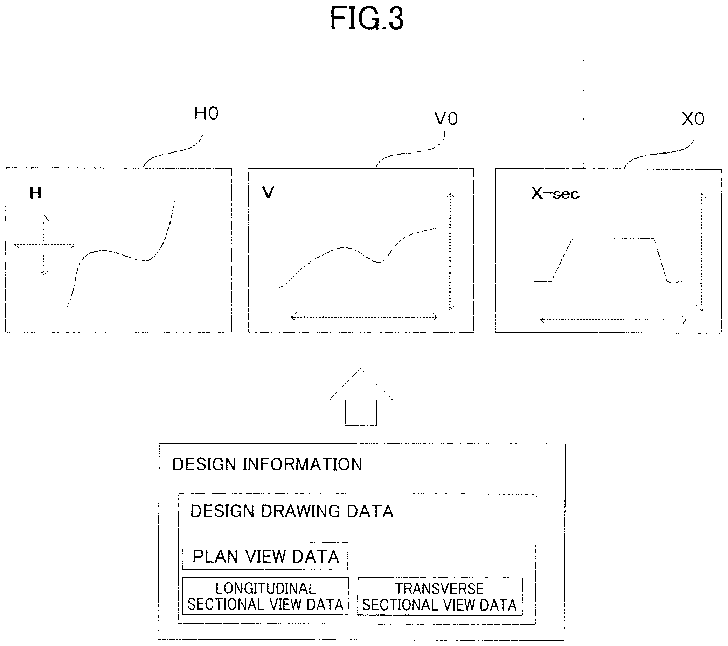

FIG. 3 illustrates summary drawings of the plan view, longitudinal sectional view, and transverse sectional view of the design drawing, generated by the design information summarization unit 125. Among the summary drawings, the summary drawing H0 represents a summary drawing of the plan view; the summary drawing V0 represents a summary drawing of the longitudinal sectional view; and the summary drawing X0 represents a summary drawing of the transverse sectional view. The summary drawing H0, summary drawing V0, and summary drawing X0 are associated with the same identifier, and generated based on the design drawing data and related to each other.

The summary drawing H0 of the plan view shows the state of the route as viewed from immediately above as in the plan view, and up-down and left-right directions are horizontal directions. The horizontal directions may be, for example, east-west and north-south directions. Within a single image of the summary drawing H0, an alignment map indicating the route from the beginning point to the end point is shown. The design information summarization unit 125 generates the summary drawing data by adjusting the overall scale so that the alignment map indicating the route from the beginning point to the end point is shown within a single image. Therefore, for example, when there are summary drawings of two plan views with different total lengths of the routes, the overall scales may differ from each other.

The summary drawing V0 of the longitudinal sectional view shows, for example, the longitudinal section along the center line of the road as in the longitudinal sectional view. The up-down directions represent the altitude, and left-right directions represent the traveling directions in the route. Within a single image of the summary drawing V0, an alignment map indicating the route from the beginning point to the end point is shown. The design information summarization unit 125 generates the summary drawing data by adjusting the overall scale so that the alignment map indicating the route from the beginning point to the end point is shown within a single image. Therefore, for example, when there are summary drawings of two longitudinal sectional views with different total lengths of the routes, the overall scales may differ from each other.

The summary drawing X0 of the transverse sectional view shows the sectional view in a direction perpendicular to the center line of the route as in the transverse sectional view. The up-down directions represent the altitude, and left-right directions represent the directions perpendicular to the center line of the route. Within a single image of the summary drawing X0, an alignment map indicating the route from the beginning point to the end point is shown. The design information summarization unit 125 generates the summary drawing data by adjusting the overall scale so that the alignment map indicating the route from the beginning point to the end point is shown within a single image. Therefore, for example, when there are summary drawings of two plan views with different total lengths of the routes, the overall scales may differ from each other. The summary drawing of the transverse sectional view basically shows a summary of the transverse sectional view of the route at the beginning point, but may be generated based on any transverse sectional view data.

In the combination of summary drawings including the summary drawing H0, summary drawing V0, and summary drawing X0, scales may differ from each other because axes representing distances such as altitudes and horizontal distances differ due to the adjustment of the scales as described above.

A design information selection display unit 126 has the function of lining up and displaying a plurality of combinations of the summary drawings generated by the design information summarization unit 125 in a selectable manner.

If the design drawing of any of the plan view, longitudinal sectional view, and transverse sectional view included in the design information is missing, the design information selection display unit 126 has the function of displaying the missing. For example, if the terminal storage unit 120 does not store the design drawing data of the transverse sectional view itself, the design information selection display unit 126 can display "No Data" indicating the absence of the design drawing.

A screen display unit 121 has the function of displaying, on the screen unit 150 of the portable display terminal, an image of at least one of the plan view, longitudinal sectional view, or transverse sectional view of the design drawing associated with the combination of the summary drawings selected by the selection unit 140.

A positional information display unit 122 has the function of displaying the position of the device 300 to be tracked, on the design drawing displayed on the screen unit 150, based on the positional information on the device 300 to be tracked received by the surveying device 200.

The positional information display unit 122 may have the function of simultaneously displaying, on the screen unit 150, two design drawings out of the plan view, longitudinal sectional view, and transverse sectional view included in the design information.

FIG. 3 is a flowchart illustrating a process flow of the survey assistance method using the portable display terminal for survey assistance and the survey assistance system including the portable display terminal for survey assistance according to the present embodiment.

First, in step S101, a design information acquisition unit 123 of a portable display terminal 100 acquires design information including an identifier of design drawing data of route, and plan view data, longitudinal sectional view data, and transverse sectional view data associated with the identifier, from design information stored in a terminal storage unit 120.

In step S102, it is determined whether the plan view data, longitudinal sectional view data, and transverse sectional view data associated with the identifier are present or any of them is missing as the acquired design drawing data. If all of the plan view data, longitudinal sectional view data, and transverse sectional view data are present (No), the process proceeds to step S104.

In step S103, if any of the plan view data, longitudinal sectional view data, or transverse sectional view data associated with the identifier is missing, i.e., absent (YES), it is determined to display that the design drawing data is missing.

In step S104, a design information summarization unit 125 generates summary drawing image data of the plan view, longitudinal sectional view, and transverse sectional view by using the plan view data, longitudinal sectional view data, and transverse sectional view data associated with the identifier.

In step S105, a plurality of combinations of the summary drawings including the summary drawings of the plan view, longitudinal sectional view, and transverse sectional view or an image indicating that design drawing is missing are lined up and displayed, and presented to the user in a selectable manner.

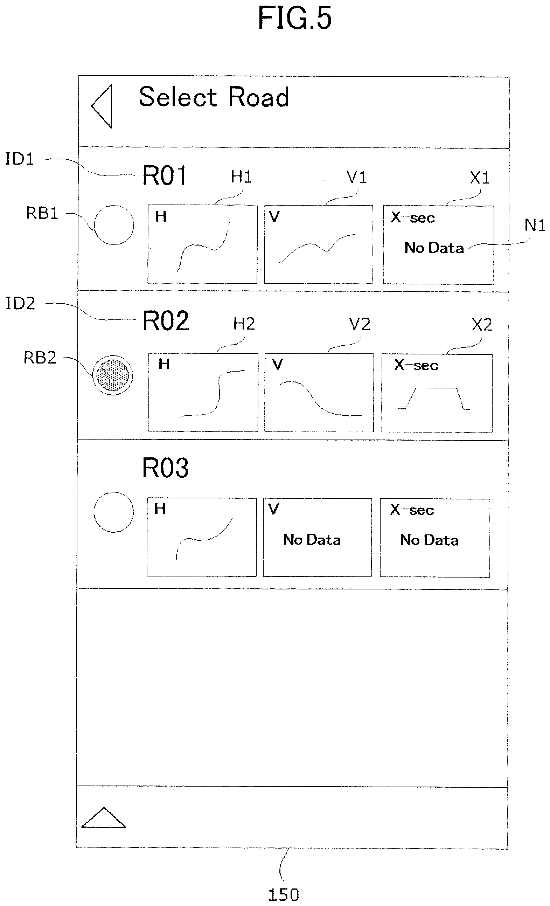

FIG. 5 is an example of a screen displayed on the screen unit 150 of the portable display terminal 100 when the design drawing is selected. In FIG. 5, on the screen unit 150, images of the plurality of combinations of summary drawings relating to the design drawings of a plurality of routes are lined up and displayed.

For example, an image region showing a summary drawing image H1 of the plan view, a summary drawing image V1 of the longitudinal sectional view, and a summary drawing image X1 of the transverse sectional view each associated with an identifier ID1 of the design drawing data of the route "R01" and the respective images are displayed. Since the design drawing data for the image X1 is absent, "No Data" is displayed to indicate that the design drawing image of the design drawing data for the image X1 is missing. A radio button RB1 for selecting the design drawing related to these summary drawing images is further shown.

The summary drawing image H1 of the plan view, the summary drawing image V1 of the longitudinal sectional view, and the summary drawing image X1 of the transverse sectional view are adjusted to the sizes that allow them to be displayed in a list on the screen of the portable display terminal 100 and then displayed. For example, in this example of the screen, three images are arranged in a row on the screen unit 150 in a vertical display mode. Although not shown in the drawing, the images may be arranged in a column or a row on the screen unit 150 in a horizontal display mode.

Similarly, an image region showing the summary drawing image H2 of the plan view, the summary drawing image V2 of the longitudinal sectional view, and the summary drawing image X2 of the transverse sectional view each associated with an identifier ID2 of the design drawing data of the route "R02" and the respective images are displayed. A radio button RB2 for selecting the design drawing related to these summary drawing images is further shown.

The combinations of these summary drawings and the like are displayed vertically on the screen unit 150 in a vertical display mode. The user can view a large number of design drawing data by vertically scrolling the screen unit 150. Although not shown in the drawing, the images may be arranged in a column on the screen unit 150 in a horizontal display mode.

The user views the plurality of combinations of these summary drawings and the like lined up and displayed, and selects a design drawing to be displayed. In this example, the function of the selection unit 140 for selecting the design drawing data is achieved by employing a touch panel display as the screen unit 150 and selecting any of the radio buttons RB1, RB2, ... , displayed on the screen by touching.

In step S106, as described above, the user operates the selection unit 140 to select the design drawing to be displayed.

In step S107, the screen display unit 121 displays the selected design drawing based on the selection by the user. The design information acquisition unit 123 acquires design drawing data of the selected route in response to the instructions given by the user using the selection unit 140, and based on the design drawing data, not summary drawings but a detailed design drawing for surveying operation and assistance thereof is displayed on the screen unit 150. The design drawing to be displayed may be, for example, not only a plan view, but also both a plan view and a transverse sectional view.

In step S108, the positional information acquisition unit 124 acquires positional information calculated by the terminal processing unit 110 based on the positional information on the device 300 to be tracked acquired by the terminal communication unit 130 or surveying results acquired by the terminal communication unit 130.

In step S109, the positional information display unit 122 calculates a position to be indicated on the design drawing, based on the positional information on the device 300 to be tracked acquired by the positional information acquisition unit 124, and displays the position so as to be superimposed on the plan view and transverse sectional view displayed on the screen unit 150.

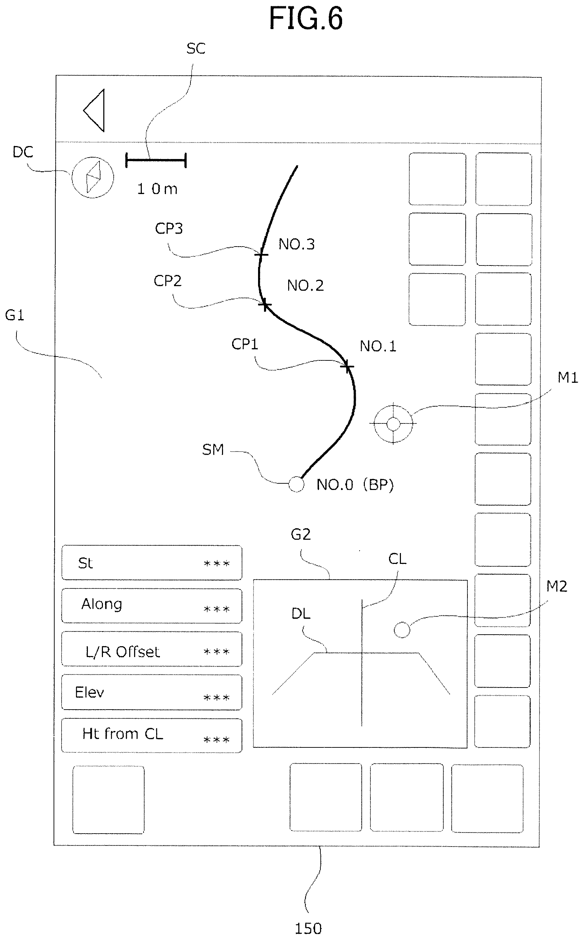

FIG. 6 is an example of a screen including the plan view and transverse sectional view, and a marking indicating the position of the device 300 to be tracked, displayed on the screen unit 150 of the portable display terminal 100 by using the design drawing selected by the user.

In FIG. 6, a plan view image G1 representing the plan view is displayed at the center of the screen. Like a so-called map display, the plan view image G1 is displayed together with a cardinal direction display DC indicating east, west, south, and north, and a scale display SC indicating a scale.

On the plan view image G1, the data of the designed route is shown, and in FIG. 6, the center line of the route is indicated by a curve. Unlike the summary drawing, the constituting point CP1 (No. 1), the constituting point CP2 (No. 2), and the constituting point CP3 (No. 3) are shown as constituting points on the center line.

On the plan view image G1, the marking M1 indicating the position of the device 300 to be tracked on the plan view is shown.

In addition, a transverse sectional view image G2 is displayed on the screen unit 150 along with the plan view image G1. The transverse sectional view image G2 shows, for example, the transverse sectional view designed by the design line DL, and a center line CL of the transverse sectional view is shown at the center thereof.

On the plan view image G1, a marking SM indicating which position the simultaneously displayed transverse sectional view image G2 corresponds to is superimposed and displayed. On the transverse sectional view image G2, a marking M2 indicating the position of the device 300 to be tracked on this image is superimposed and displayed.

In this manner, by using the portable display terminal for survey assistance, survey assistance method, and survey assistance program according to the present embodiment, the design information summarization unit 125 generates summary drawings of a plan view, longitudinal sectional view, and transverse sectional view of the design drawing based on the design information acquired by the design information acquisition unit 123, and the design information selection display unit 126 lines up and displays a plurality of combinations of the summary drawings in a selectable manner. Thus, in selecting a design drawing, the user can retrieve the design information while intuitively recognizing the three-dimensional contents of the design drawing without relying only on the identifier of the design drawing such as a file name.

Further, by using the survey assistance system, survey assistance method, and survey assistance program according to the present embodiment, the position of the device 300 to be tracked can be displayed on the design drawing selected based on the combination of the summary drawings and displayed on the screen unit 150, and the operator can conduct a survey while knowing the position of the surveying point in the site.

The design drawing is a design drawing of route, and each summary drawing of the design drawing is an image that displays from the beginning point to the end point of the route in a single image, which allows the user to intuitively grasp the overall image of the route to be selected.

If a design drawing of any of the plan view, longitudinal sectional view, or transverse sectional view included in the design information is missing, the design information selection display unit 126 displays the missing so that the presence or absence of data of each element of the route can be recognized at a glance.

The embodiment of the present disclosure has been described above, but the aspects of the present disclosure are not limited to the embodiment.

### DESCRIPTION OF REFERENCE CHARACTERS

- 1: Survey Assistance System
- 2: User
- 100: Portable Display Terminal
- 110: Terminal Processing Unit
- 120: Terminal Storage Unit
- 121: Screen Display Unit
- 122: Positional Information Display Unit
- 123: Design Information Acquisition Unit
- 124: Positional Information Acquisition Unit
- 130: Terminal Communication Unit
- 140: Selection Unit
- 150: Screen Unit
- 200: Surveying Device
- 210: Surveying Unit
- 211: Distance Measurement Unit
- 212: Angle Measurement Unit
- 220: Surveying Storage Unit
- 230: Surveying Communication Unit
- 240: Surveying Control Unit
- 250: Tracking Control Unit
- 300: Device to Be Tracked

## Claims

1. A portable display terminal for survey assistance, the portable display terminal comprising:
a screen unit and a selection unit of the portable display terminal;
a design information acquisition unit configured to acquire design information including an identifier of a design drawing, and a plan view, a longitudinal sectional view, and a transverse sectional view that are associated with the identifier;
a design information summarization unit configured to generate summary drawings of the plan view, the longitudinal sectional view, and the transverse sectional view of the design drawing based on the design information acquired by the design information acquisition unit;
a design information selection display unit configured to line up and display a plurality of combinations of the summary drawings generated by the design information summarization unit in a selectable manner; and
a screen display unit configured to display an image of at least one of the plan view, the longitudinal sectional view, or the transverse sectional view of the design drawing associated with the combination of the summary drawings selected by the selection unit on the screen unit of the portable display terminal.

2. The portable display terminal of claim 1, wherein
the design drawing is a design drawing of a route, and
the summary drawings are each a single image displaying from a beginning point to an end point of the route.

3. The portable display terminal of claim 1 or 2, wherein
if the design drawing of any of the plan view, the longitudinal sectional view, and the transverse sectional view included in the design information is missing, the design information selection display unit displays the missing.

4. A survey assistance system including a surveying device, a device to be tracked, and a portable display terminal, the survey assistance system further comprising:
a screen unit and a selection unit of the portable display terminal;
a design information acquisition unit configured to acquire design information including an identifier of a design drawing, and a plan view, a longitudinal sectional view, and a transverse sectional view that are associated with the identifier;
a design information summarization unit configured to generate summary drawings of the plan view, the longitudinal sectional view, and the transverse sectional view of the design drawing based on the design information acquired by the design information acquisition unit;
a design information selection display unit configured to line up and display a plurality of combinations of the summary drawings generated by the design information summarization unit in a selectable manner;
a screen display unit configured to display an image of at least one of the plan view, the longitudinal sectional view, or the transverse sectional view of the design drawing associated with the combination of the summary drawings selected by the selection unit on the screen unit of the portable display terminal;
a surveying unit of the surveying device, the surveying unit being configured to survey three-dimensional coordinates which are positional information on the device to be tracked installed away from the surveying device;
a surveying communication unit of the surveying device, the surveying communication unit being configured to transmit the positional information on the device to be tracked to the portable display terminal;
a terminal communication unit of the portable display terminal, the terminal communication unit being configured to receive the positional information; and
a positional information display unit configured to display a position of the device to be tracked on the design drawing displayed on the screen unit based on the positional information received by the terminal communication unit.

5. The survey assistance system of claim 4, wherein
the design drawing is a design drawing of a route, and
the summary drawings are each a single image displaying from a beginning point to an end point of the route.

6. The survey assistance system of claim 4 or 5, wherein
if the design drawing of any of the plan view, the longitudinal sectional view, and the transverse sectional view included in the design information is missing, the design information selection display unit displays the missing.

7. A survey assistance method comprising:
acquiring, by a design information acquisition unit of a portable display terminal, design information including an identifier of a design drawing, and a plan view, a longitudinal sectional view, and a transverse sectional view that are associated with the identifier;
generating, by a design information summarization unit, summary drawings of the plan view, the longitudinal sectional view, and the transverse sectional view of the design drawing based on the design information acquired by the design information acquisition unit;
lining up and displaying, by a design information selection display unit, a plurality of combinations of the summary drawings generated by the design information summarization unit in a selectable manner; and
displaying, by a screen display unit, an image of at least one of the plan view, the longitudinal sectional view, or the transverse sectional view of the design drawing associated with the combination of the summary drawings selected by a selection unit, on a screen unit of the portable display terminal.

8. The survey assistance method of claim 7, further comprising:
surveying, by a surveying unit of a surveying device, three-dimensional coordinates as positional information of a device to be tracked located away from the surveying device;
transmitting, by a surveying communication unit of the surveying device, the positional information on the device to be tracked to a communication unit of the portable display terminal; and
displaying, by a positional information display unit of the portable display terminal, a position of the device to be tracked on the design drawing displayed on the screen unit based on the positional information received by a terminal communication unit.

9. A survey assistance program for causing a computer to execute:
acquiring, by a design information acquisition unit of a portable display terminal, design information including an identifier of a design drawing, and a plan view, a longitudinal sectional view, and a transverse sectional view that are associated with the identifier;
generating, by a design information summarization unit, summary drawings of the plan view, the longitudinal sectional view, and the transverse sectional view of the design drawing based on the design information acquired by the design information acquisition unit;
lining up and displaying, by a design information selection display unit, a plurality of combinations of the summary drawings generated by the design information summarization unit in a selectable manner; and
displaying, by a screen display unit, an image of at least one of the plan view, the longitudinal sectional view, or the transverse sectional view of the design drawing associated with the combination of the summary drawings selected by a selection unit on a screen unit of the portable display terminal.

10. The survey assistance program of claim 9 for causing the computer to further execute:
surveying, by a surveying unit of a surveying device, three-dimensional coordinates as positional information of a device to be tracked located away from the surveying device;
transmitting, by a surveying communication unit of the surveying device, the positional information on the device to be tracked to a communication unit of the portable display terminal; and
displaying, by a positional information display unit of the portable display terminal, a position of the device to be tracked on the design drawing displayed on the screen unit based on the positional information received by a terminal communication unit.
